(19) Europäisches Patentamt
European Patent Office
Office européen des brevets

(11) **EP 3 225 118 A1**

(12) **EUROPEAN PATENT APPLICATION**
published in accordance with Art. 153(4) EPC

(43) Date of publication:
**04.10.2017 Bulletin 2017/40**

(21) Application number: **14906952.8**

(22) Date of filing: **27.11.2014**

(51) Int Cl.:
**A24F 47/00** (2006.01) **G06F 17/30** (2006.01)

(86) International application number:
**PCT/CN2014/092322**

(87) International publication number:
**WO 2016/082136 (02.06.2016 Gazette 2016/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huizhou Kimree Technology Co., Ltd Huizhou, Guangdong 516000 (CN)**

(72) Inventor: **XIANG, Zhiyong
Dongguan
Guangdong 523000 (CN)**

(74) Representative: **Puschmann Borchert Bardehle Patentanwälte Partnerschaft mbB
Bajuwarenring 21
82041 Oberhaching (DE)**

(54) **ELECTRONIC CIGARETTE AND SMOKE VOLUME CONTROL METHOD THEREFOR**

(57)     An electronic cigarette and a smoke volume control method therefor. The electronic cigarette comprises an air flow sensor (11), an atomizer (12), a voltage output unit (13) and a smoke volume control unit (14). The smoke volume control method comprises: pre-establishing a mathematical model of a relationship between smoking intensity as well as smoking time and output voltage or output power for simulating cigarette smoke volume; detecting current smoking intensity and smoking time of the electronic cigarette; calculating and/ or searching for corresponding voltage or power from the mathematical model according to the detected smoking intensity and smoking time; and adjusting the voltage or power output to the atomizer (12) of the electronic cigarette according to the calculated and/ or found voltage or power. In this way, the volume of smoke produced by the electronic cigarette approaches of even reaches the volume of smoke produced by the electronic cigarette approaches or even reaches the volume of smoke produced by a cigarette, thereby achieving the same smoking taste as the cigarette.

| |
|---|
| pre-establishing a mathematical model of a relationship among smoking intensity, smoking time and an output voltage or output power to simulate a smoke amount of a cigarette — S1 |
| detecting current smoking intensity and current smoking time of the electronic cigarette — S2 |
| calculating and/ or finding out a corresponding voltage or corresponding power from the mathematical model, according to the detected smoking intensity and the detected smoking time — S3 |
| adjusting a voltage or power outputted to the atomizer, according to the calculated and/ or found voltage or power — S4 |

Figure 4

EP 3 225 118 A1

## Description

FIELD OF THE INVENTION

The present application relates to a technical field of an electronic cigarette, and more particularly relates to an electronic cigarette and a smoke amount controlling method.

BACKGROUND OF THE INVENTION

In the prior art of an airflow sensor type of an electronic cigarette, there is no a significant correlation between a size and speed of a smoking force and a smoke amount of the electronic cigarette, and a fixed smoking start negative pressure threshold is set, when the smoking negative pressure is greater than or equal to the threshold, a controller turns on a switch to heat an atomizer, whereas when the smoking negative pressure is less than the threshold, the controller turns off the switch to stop heating the atomizer.

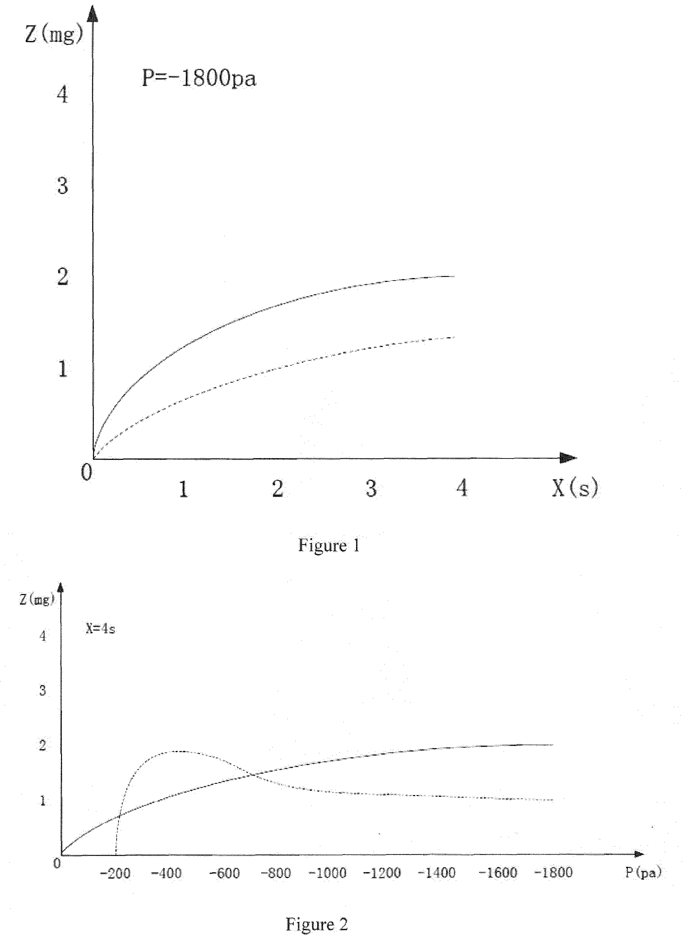

For the existing airflow sensor type of the electronic cigarette, when the smoking negative pressure is constant, if smoking time is short, the smoke amount produced by the electronic cigarette will be small, whereas if the smoking time is long, the smoke amount will be large. Figure 1 is a schematic view of relationship curves of a smoke amount and smoking time of an existing cigarette and the electronic cigarette with a certain smoking negative pressure, and the solid line represents the cigarette and dotted line represents the electronic cigarette. As shown in Figure 1, when the smoking negative pressure is - 1800 Pa, the smoke amount Z (quality unit mg) of the cigarette and the electronic cigarette is positively correlated with the smoking time X (s).

Figure 2 is a schematic view of relationship curves of a smoke amount and a smoking negative pressure of the existing cigarette and the electronic cigarette with a certain smoking time, and the solid line represents the cigarette and dotted line represents the electronic cigarette. As shown in Figure 2, when the smoking time is 4 seconds, the smoke amount of the cigarette Z (quality unit mg) and the smoking negative pressure P (pa) are positively related, for instance, when the smoking negative pressure is small, tobacco burns slowly and the smoke amount is relatively small, while the smoking negative pressure is large, the burning of the tobacco is intense and the smoke amount is relatively large. For the electronic cigarette, there is no a clear relationship between the smoke amount and smoking negative pressure, as the dotted line shown in Figure 2, when the smoking negative pressure is small, the smoke amount is relatively large, and when the smoking negative pressure is large, the smoke amount produced is relatively small. The main reason is that when the smoking negative pressure is large, airflow velocity in the electronic cigarette is too fast, and the rapid airflow flows through a heating wire of the atomizer will cause temperature of the heating wire to decrease, resulting in less smoke amount generated by the electronic cigarette.

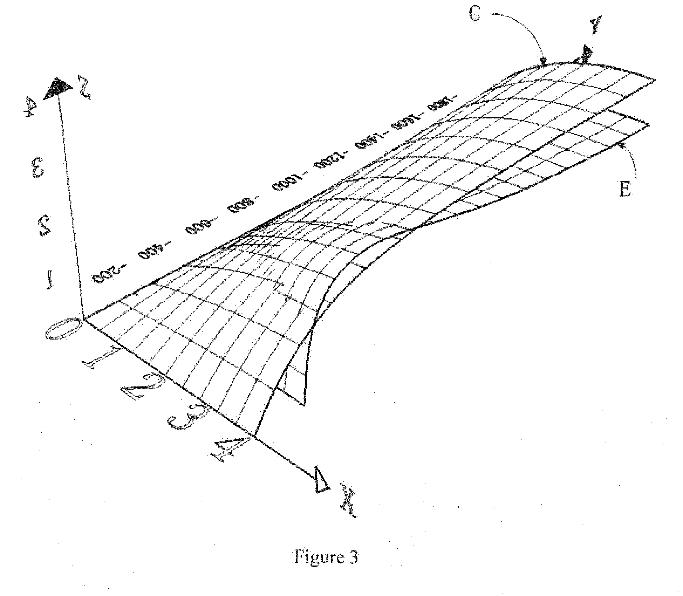

Figure 3 is a schematic view of relationship curves of a smoke amount, a smoking negative pressure and smoking time of the existing cigarette and the electronic cigarette, and the surface C represents the cigarette and the surface E represents the electronic cigarette. As shown in Figure 3, in an initial stage of smoking the electronic cigarette, a certain smoking negative pressure is required to start the controller to turn on the switch to heat the atomizer, while when the cigarette is ignited, a burning temperature is kept, thus at the beginning of atomization, an atomization speed of the cigarette is faster than that of the electronic cigarette. With the lengthening of time, the heating wire of the electronic cigarette is in an enclosed space of the atomizer, while the cigarette heat head is exposed outside, thus the temperature of the heating wire of the electronic cigarette rises faster than that of the cigarette, and the smoke amount produced by both are different. Therefore, there is a defect that a smoking taste of the electronic cigarette is different from a smoking taste of the cigarette.

SUMMARY OF THE INVENTION

For the defect that the smoking taste of the cigarette is different from that of the airflow sensor type of the electronic cigarette, the present invention provides an electronic cigarette and a smoke amount controlling method so as to make the smoke amount of the electronic cigarette close to or equal to the smoke amount of the cigarette and obtain the same taste.

A Technical solution to solve technical problems in the present invention is provided for controlling a smoke amount of an electronic cigarette, the method comprises steps as follows:

S1. pre-establishing a mathematical model of a relationship among smoking intensity, smoking time and output voltage or an output power to simulate a smoke amount of a cigarette, the smoking intensity is characterized by an airflow velocity in an air flow path of the electronic cigarette and/or a size of an air pressure inside the electronic cigarette;

S2. detecting current smoking intensity and current smoking time of the electronic cigarette;

S3. calculating and/or finding out a corresponding voltage or corresponding power from the mathematical model, according to the detected smoking intensity and the detected smoking time;

S4. adjusting a voltage or power outputted to an atomizer of the electronic cigarette, according to the calculated and/ or found voltage or power.

Advantageously, the mathematical model is a table with pre-measured values, and the smoking intensity is characterized by the size of the air pressure inside the electronic cigarette, and the method comprising steps as follows:

S11. pre-establishing the mathematical model of the relationship among a smoking negative pressure, the smoking time and the output voltage or the output power to simulate the smoke amount of cigarette, the smoking negative pressure refers to the size of the air pressure inside the electronic cigarette;

S21. detecting a current smoking negative pressure and the current smoking time of the electronic cigarette;

S31. finding out the corresponding voltage or the corresponding power from the mathematical model, according to the detected smoking negative pressure and the smoking time;

S41. adjusting the voltage or power outputted to the atomizer, according to the found voltage or the found power.

Advantageously, the smoking intensity is characterized by the size of the air pressure inside the electronic cigarette; the mathematical model comprises a smoke amount model of the cigarette, a smoke amount model of an existing electronic cigarette and a first relationship table; the first relationship table stores a compensation smoke amount and a corresponding compensation voltage or corresponding compensation power, and the smoke amount model of the cigarette is configured to calculate a relationship among a smoking negative pressure, the smoking time and a standard smoke amount of the cigarette, and the smoke amount model of the existing electronic cigarette is configured to calculate a relationship among the smoking negative pressure, the smoking time and a smoke amount of the existing electronic cigarette, and the smoking negative pressure refers to the size of the air pressure inside the electronic cigarette; the method comprising steps as follows:

S12. pre-establishing the smoke amount model of the cigarette, the smoke amount model of the existing electronic cigarette and the first relationship table;

S22. detecting a current smoking negative pressure and the current smoking time of the electronic cigarette;

S32. according to the detected smoking negative pressure and the smoking time, calculating the standard smoke amount of the cigarette, positively correlated to the smoking negative pressure and the smoking time by the smoke amount model of the cigarette, calculating the smoke amount of the existing electronic cigarette by the smoke amount model of the existing electronic cigarette, and calculating a difference between the standard smoke amount of the cigarette and the smoke amount of the existing electronic cigarette to obtain the compensation smoke amount, and finding the corresponding compensation voltage or the corresponding compensation power from the first relationship table according to the calculated compensation smoke amount;

S42. adjusting the voltage or power outputted to the atomizer according to the found compensation voltage or the found compensation power.

Advantageously, the step S42 further comprises following sub-steps:

S421. obtaining a required output voltage by summing up the found compensation voltage a the current voltage outputted to the atomizer, or obtaining required output power by summing up the found compensation power and current power outputted to the atomizer;

S422. outputting the required output voltage or the required output power to the atomizer. Advantageously, the sub-step S422 further comprises following secondary sub-steps:

S4221. calculating a duty ratio, according to the required output voltage and the current voltage outputted to the atomizer, or according to the required output power and the current power outputted to the atomizer;

S4222. Making that the voltage outputted to the atomizer is the required output voltage or that the power outputted to the atomizer is the required output power according to the calculated duty ratio. Advantageously, in the secondary sub-steps S4221, the duty ratio D is calculated according to a following formula:

$$D = \frac{U_1}{U_2}$$

U1 of the formula represents the required output voltage and U2 represents the current voltage outputted to the atomizer;
Or

$$D = \frac{\sqrt{PR}}{U_2}$$

P of the formula represents the required output power and R represents resistance of the atomizer. Advantageously, the smoking intensity is characterized by the size of the air pressure inside the electronic cigarette; the mathematical model comprises a smoke amount model of the cigarette and a second relationship table; the second relationship table stores a smoke amount of the existing electronic cigarette and a corresponding output voltage or corresponding output power, and the smoke amount model of the cigarette is configured to calculate a relationship among a smoking negative pressure, the smoking time and a standard smoke amount of the cigarette, and the smoking negative pressure refers to the size of the air pressure inside the electronic cigarette; the method comprising steps as follows:

S13. pre-establishing the smoke amount model of the cigarette and the second relationship table;
S23. detecting a current smoking negative pressure and the current smoking time of the electronic cigarette;
S33. calculating the standard smoke amount of the cigarette by the smoke amount model of the cigarette according to the detected smoking negative pressure and the detected smoking time, the standard smoke amount of the cigarette is positively correlated to the smoking negative pressure and the smoking time, and finding the corresponding voltage or the corresponding power from the second relationship table according to the calculated standard smoke amount;
S43. outputting the found voltage or the found power to the atomizer of the electronic cigarette. Advantageously, the step S43 further comprises following sub-steps:

S431. calculating a duty ratio according to the found voltage and a current voltage outputted to the atomizer, or according to the found power and current power outputted to the atomizer;
S432. making that the voltage outputted to the atomizer is the found voltage or that the power outputted to the atomizer is the found power according to the calculated duty ratio.

Advantageously, in the sub-step S431, the duty ratio D is calculated according to a following formula :

$$D = \sqrt{\frac{U_3}{U_2}}$$

U3 of the formula represents the found voltage from the second relationship table, and U2 represents the current voltage outputted to the atomizer; or,

$$D = \frac{\sqrt{PR}}{U_2}$$

P of the formula represents the found power, and R represents resistance of the atomizer.
The invention provides an electronic cigarette, comprising a gas sensor and an atomizer, the electronic cigarette further comprises:

a voltage outputting unit connected to the atomizer;
a smoke amount controlling unit connected to the gas sensor and the voltage outputting unit, respectively, and the smoke amount controlling unit (14) stores a mathematical model of a relationship among smoking intensity, smoking time and an output voltage or output power to simulate a smoke amount of a cigarette, the smoking intensity is characterized by an airflow velocity in an air flow path of the electronic cigarette and/or a size of an air pressure inside the electronic cigarette; and the smoke amount controlling unit is configured to calculate the smoking time of the electronic cigarette, and also configured to calculate and/ or to find out a corresponding voltage or corresponding power from the mathematical model according to the smoking intensity detected by the gas sensor and the calculated smoking time, and the smoke amount controlling unit (14) is further configured to control the voltage outputting unit to adjust a voltage or power outputted to the atomizer according to the calculated and/ or found voltage or found power.

Advantageously, the mathematical model is a table with pre-measured values, and the smoking intensity is characterized by the size of the air pressure inside the electronic cigarette; the smoke amount controlling unit finds the corresponding voltage or the corresponding power from the mathematical model according to a detected smoking negative pressure and detected smoking time, and the voltage outputting unit is controlled to adjust the voltage or power outputted to the atomizer, according to the found voltage or found power; the smoking negative pressure refers to the size of the air pressure inside the electronic cigarette.

Advantageously, the smoking intensity is characterized by the size of the air pressure inside the electronic cigarette; the mathematical model comprises a smoke amount model of the cigarette, a smoke amount model of an existing electronic cigarette and a first relationship table; the first relationship table stores a compensation smoke amount and a corresponding compensation voltage or corresponding compensation power, and the smoke amount model of the cigarette is configured to calculate a relationship among a smoking negative pressure, the smoking time and a standard smoke amount of the cigarette, and the smoke amount model of the existing electronic cigarette is configured to calculate a relationship among the smoking negative pressure, the smoking time and a smoke amount of the existing electronic cigarette, and the smoking negative pressure refers to the size of the air pressure inside the electronic cigarette;

According to the smoking negative pressure detected by the gas sensor and the calculated smoking time, the smoke amount controlling unit uses the smoke amount model of the cigarette to calculate the standard smoke amount of the cigarette, the standard smoke amount of the cigarette is positively correlated with the smoking negative pressure and the smoking time, and the smoke amount controlling unit further uses the smoke amount model of the existing electronic cigarette to calculate the smoke amount of the existing electronic cigarette, a difference between the standard smoke amount of the cigarette and the smoke amount of the existing electronic cigarette is calculated to obtain the compensation smoke amount, and the corresponding compensation voltage or the corresponding compensation power is found from the first relationship table according to the calculated compensation smoke amount, and the voltage outputting unit is controlled to adjust the voltage or power outputted to the atomizer according to the found compensation voltage or the found compensation power.

Advantageously, the smoke amount controlling unit comprises: a summation module configured to obtain a required output voltage from a sum of the found compensation voltage and a current voltage outputted to the atomizer, or obtain required output power from a sum of the found compensation power and current power outputted to the atomizer;

a control module configured to control the voltage outputting unit to output the required output voltage or the required output power to the atomizer.

Advantageously, the voltage outputting unit comprises a power switch; the control module calculates a duty ratio according to the required output voltage and the current voltage outputted to the atomizer, or according to the required output power and the current power outputted to the atomizer, and the control module outputs a pulse width modulation signal with the calculated duty ratio via the power switch to output the required output voltage or the required output power to the atomizer; the control module calculates the duty ratio D according to a following formula :

$$D = \frac{U_1}{U_2}$$

U1 of the formula represents the required output voltage and U2 represents the current voltage outputted to the atomizer;
or,

$$D = \frac{\sqrt{PR}}{U_2}$$

P of the formula represents the required output power and R represents resistance of the atomizer.

Advantageously, the voltage outputting unit comprises a step-up/ down circuit; the control module changes an output voltage of the step-up/ down circuit to output the required or the required output power to the atomizer through the step-up/ down circuit.

Advantageously, the smoking intensity is characterized by the size of the air pressure inside the electronic cigarette; the mathematical model comprises a smoke amount model of the cigarette and a second relationship table; the second relationship table stores a smoke amount of an existing electronic cigarette and a corresponding output voltage or corresponding output power, and the smoke amount model of the cigarette is configured to calculate a relationship among a smoking negative pressure, the smoking time and a standard smoke amount of the cigarette, and the smoking negative pressure refers to the size of the air pressure inside the electronic cigarette;

According to a current smoking negative pressure detected by the gas sensor and the calculated smoking time of the electronic cigarette, the smoke amount controlling unit uses the smoke amount model of the cigarette to calculate the standard smoke amount of the cigarette, and according to the calculated standard smoke amount, the corresponding voltage or the corresponding power is found from the second relationship table, and the voltage outputting unit is controlled to output the found voltage or the found power to the atomizer.

Advantageously, the voltage outputting unit comprises a step-up/ down circuit; the smoke amount controlling unit changes an output voltage of the step-up/ down circuit to output the found voltage or the found power to the atomizer through the step-up/ down circuit.

Advantageously, the voltage outputting unit comprises a power switch; the smoke amount controlling unit calculate s a duty ratio according to the found voltage and a current voltage outputted to the atomizer, or according to the found power and current power outputted to the atomizer, and the voltage outputting unit outputs a pulse width modulation signal with the calculated duty ratio to the power switch to change the voltage outputted to the atomizer.

Advantageously, the smoke amount controlling unit calculates the duty ratio D according to a following formula:

$$D = \sqrt{\frac{U_3}{U_2}}$$

U3 of the formula represents the found voltage from the second relationship table, and U2 represents the current voltage outputted to the atomizer; or,

$$D = \frac{\sqrt{PR}}{U_2}$$

P of the formula represents the found power and R represents resistance of the atomizer.

Advantageously, any one of the above-mentioned electronic cigarette of the present invention further comprises: a signal amplification unit connected to the air pressure sensor and the smoke amount controlling unit, respectively, and the signal amplification unit is configured to amplify a current smoking negative pressure signal of the electronic cigarette detected by the gas sensor and output the amplified smoking negative pressure signal to the smoke amount controlling unit.

The electronic cigarette and the smoke amount controlling method of the present invention have the following advantages, according to the smoke amount of the cigarette calculated under the same conditions of the smoking negative pressure and the smoking time, the output voltage or output power of the atomizer is adjusted, thus the smoke amount of the electronic cigarette is close or equal to the amount of the cigarette.

BRIEF DESCRIPTION OF THE DRAWINGS

Figure 1      is a schematic view of relationship curves of smoke amount and smoking time of an existing cigarette and an electronic cigarette with a certain smoking negative pressure;

Figure 2      is a schematic view of relationship curves of smoke amount and smoking negative pressure of the existing cigarette and the electronic cigarette with a certain smoking time;

Figure 3      is a schematic view of relationship curves of smoke amount, smoking negative pressure and smoking time of the existing cigarette and the electronic cigarette;

Figure 4      is a flow chart of a method for controlling smoke amount of the electronic cigarette of a first embodiment of the present invention;

Figure 5      is a schematic view of a structure of a first embodiment of the electronic cigarette of the present invention;

Figure 6      is a schematic view of a structure of a second embodiment of the electronic cigarette of the present invention;

Figure 7      is a schematic view of a structure of a fourth embodiment of the electronic cigarette of the present invention.

DETAILED DESCRIPTION OF THE PREFERRED EMBODIMEN

The present invention provides an electronic cigarette and a smoke amount controlling method to solve the defect that a smoking taste of an existing airflow sensor electronic cigarette is different from a smoking taste of the cigarette, so that the smoke amount of the electronic cigarette is close to or equal to the smoke amount of the cigarette, and the electronic cigarette has the same taste with the cigarette. The present application is described in detail with reference to the accompanying drawings and embodiments.

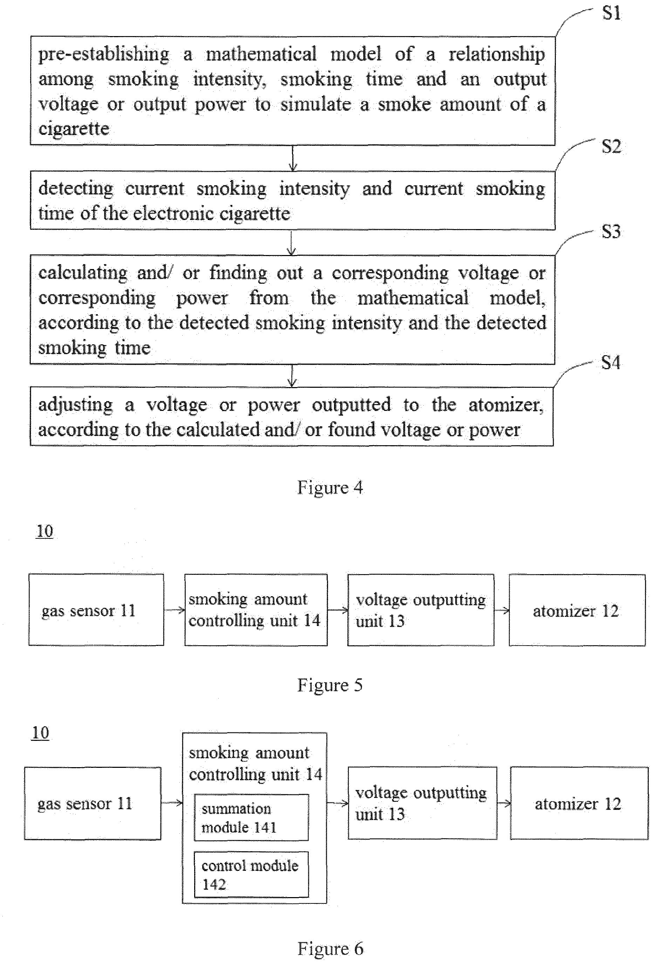

Figure 4 is a flow chart of a method for controlling smoke amount of the electronic cigarette of a first embodiment of the present invention, as shown in Figure 4, the smoke amount controlling method of the electronic cigarette of the present embodiment comprises following steps:

S1. pre-establishing a mathematical model of a relationship among smoking intensity, smoking time and an output voltage or output power to simulate the smoke amount of the cigarette, and the smoking intensity is characterized by an airflow velocity in an air flow path of the electronic cigarette and/or a size of an air pressure inside the electronic cigarette;

S2. detecting current smoking intensity and current smoking time of the electronic cigarette;

S3. calculating and/ or finding out a corresponding voltage or corresponding power from the mathematical model, according to the detected smoking intensity and the detected smoking time;

S4. adjusting a voltage or power outputted to the atomizer, according to the calculated and/ or found voltage or found power, thus the smoke amount of the electronic cigarette is close or equal to the smoke amount of the cigarette.

In the present embodiment, the mathematical model is a table with pre-measured values, and the smoking intensity is characterized by the size of the air pressure inside the electronic cigarette; Figure 5 is the schematic view of the structure of the electronic cigarette 10, the electronic cigarette 10 has applied with the smoke amount controlling method, and the electronic cigarette 10 comprises a gas sensor 11, an atomizer 12, a voltage outputting unit 13, and a smoke amount controlling unit 14, the smoke amount controlling unit 14 is connected to the gas sensor11 and the voltage outputting unit 13, respectively, and the voltage outputting unit 13 is also connected to the atomizer 12. In the present embodiment, the gas sensor 11 is an air pressure sensor.

Specifically, in step S1, the mathematical model of a relationship among a smoking negative pressure, the smoking time and the output voltage or output power is pre-established to simulate the smoke amount of the cigarette, and the mathematical model is stored in the smoking amount controlling unit 14. The smoking negative pressure refers to the size of the air pressure (S11) inside the electronic cigarette. When the voltage of the atomizer 12 is the output voltage or output power in the table, the smoke amount of the electronic cigarette 10 is close to or equal to a standard smoke amount of the cigarette under the smoking negative pressure and smoking time corresponding to the output voltage or output power.

When the mathematical model is established, firstly data of the standard smoke amount of the cigarette produced in multiple groups of the smoking negative pressure and the smoking time is measured, and then the voltage outputted to the atomizer (output voltage) required to produce the standard smoke amount by the electronic cigarette is measured under the same conditions of the smoking negative pressure and the smoking time. The smoking negative pressure, the smoking time and the output voltage or the output power are correspondingly stored to form a table, then the mathematical model is established.

In step S2, the smoking negative pressure is detected by the gas sensor 11, and the smoking negative pressure refers to the air pressure inside the electronic cigarette. When information of the smoking negative pressure detected by the gas sensor 11 is received by the smoke amount controlling unit 14, the smoke amount controlling unit 14 starts timing until the information of the smoking negative pressure is interrupted, so as to the smoking time (S21).

In step S3, according to the detected smoking negative pressure and the calculated smoking time, the smoke amount controlling unit 14 finds the corresponding voltage or power from the mathematical model (S31).

In step S4, according to the found voltage or found power, the smoke amount controlling unit 14 controls the voltage outputting unit 13 to adjust the voltage or power outputted to enable the voltage outputted to the atomizer 12 is the found voltage or the power outputted to the atomizer 12 is the found power. In other embodiments, the smoking intensity can also be characterized by the airflow velocity in the air flow path of the electronic cigarette, therefore the smoke intensity can be detected by an airflow velocity sensor, thus, a detection method of the smoking intensity is not specifically defined in the present embodiment.

In the first embodiment of the smoke amount controlling method of the electronic cigarette of the present invention, the pre-established data model is a table, and the table stores the smoking negative pressure, the smoking time and a corresponding output voltage or corresponding output power, and the corresponding output voltage or the corresponding output power found from the mathematical model is outputted to the atomizer, thus the smoke amount of the electronic cigarette is equal to the smoke amount of the cigarette under the same conditions, so the taste of the electronic cigarette is close or equal to the taste of the cigarette.

In the second embodiment of the smoke amount controlling method of the electronic cigarette of the present invention, the smoke amount controlling method comprises the following steps:

S1. pre-establishing a mathematical model of a relationship among smoking intensity, smoking time and an output voltage or output power to simulate the smoke amount of the cigarette, and the smoking intensity is characterized by an airflow velocity in an air flow path of the electronic cigarette and/or a size of an air pressure inside the electronic cigarette;

S2. detecting current smoking intensity and current smoking time of the electronic cigarette;

S3. calculating and/ or finding out a corresponding voltage or corresponding power from the mathematical model, according to the detected smoking intensity and the detected smoking time;

S4. adjusting a voltage or power outputted to the atomizer according to the calculated and/ or found voltage or found power, so that the smoke amount of the electronic cigarette is close or equal to the smoke amount of the cigarette.

A difference between the smoke amount controlling method of present embodiment and the first embodiment is that in the present embodiment, the mathematical model comprises a smoke amount model of the cigarette, an smoke amount model of an existing electronic cigarette and a first relationship table, and the first relationship table stores a compensation smoke amount and a corresponding compensation voltage or corresponding compensation power.

Specifically, in the step S1, the smoke amount model of the cigarette, the smoke amount model of the existing electronic cigarette and the first relation table are pre-established, and the smoke amount model of the cigarette, the smoke amount model of the existing electronic cigarette and the first relationship table are stored in a smoke amount controlling unit 14 (S12). Among them, the smoke amount model of the cigarette is configured to calculate a relationship among a smoking negative pressure, the smoking time and a standard smoke amount (as the curved surface C showed in Figure 3). The smoke amount model of the existing electronic cigarette is configured to calculate a relationship among the smoking negative pressure, the smoking time and a smoke amount of the existing electronic cigarette (as the curved surface E showed in Figure 3). The atomizer of the existing electronic cigarette configured to establish the first relationship table is the same as the atomizer of the electronic cigarette applying with the smoke amount controlling method. The smoke amount model of the cigarette is taken as an example to illustrate an establishment process of the model: firstly, multiple sets of data of smoking negative pressure P, smoking time X and a smoke amount Z of the cigarette are measured through experiments, and the measured multiple sets of data are fitted to the surface C by software to obtain a function of C, C = f (P, X, Z). A process of establishing the smoke amount model of the existing electronic cigarette is similar, multiple sets of data of the smoking negative pressure, the smoking time and the smoke amount of the existing electronic cigarette are measured. Through experimental measurements and calculations, multiple sets of data of the compensation smoke amount (a difference between the standard smoke amount and the smoke amount which is produced by the existing electronic cigarette under the same conditions), the compensation voltage, or the compensation power are obtained, and the compensation smoke amount and the compensation voltage or compensation power are stored correspondingly to obtain the first relationship table.

In step S2, the smoking negative pressure is detected by a gas sensor 11, and the smoking time is calculated by the smoke amount controlling unit 14, and when information of the smoking negative pressure detected by the gas sensor 11 is received by the smoke amount controlling unit 14, the smoke amount controlling unit 14 starts timing until the information of the smoking negative pressure is interrupted (S22).

In step S3, the smoke amount controlling unit 14 calculates the standard smoke amount and the smoke amount which is produced by the existing electronic cigarette by substituting the smoking negative pressure detected by the gas sensor 11 and the calculated smoking time into the smoke amount model of the cigarette and the smoke amount model of the existing electronic cigarette, and a difference of the standard smoke amount and the smoke amount which is produced by the existing electronic cigarette is calculated to obtain the compensation smoke amount. If the calculated difference of the smoke amount is added to an existing smoke amount of the electronic cigarette, the smoke amount of the electronic cigarette will be close or equal to the smoke amount of the cigarette. The smoke amount controlling unit 14 finds the corresponding compensation voltage or compensation power from the first relationship table according to the calculated compensation smoke amount (S32).

In step S4, if the found compensation voltage is outputted to an atomizer 12 on the basis of a current output voltage or the found compensation power is outputted to the atomizer 12 on the basis of a current output voltage, the smoke amount of an electronic cigarette 10 will be close or equal to the smoke amount of the cigarette. Firstly, a required output voltage is obtained by the smoke amount controlling unit 14 from the sum of the found compensation voltage and a current voltage outputted to the atomizer, or the found compensation power and a current power outputted to the atomizer (S421), and the smoke amount controlling unit 14 controls a voltage outputting unit 13 to output the required output voltage or the required output power to the atomizer12 (S422).

The voltage outputting unit 13 comprises a step-up/ down circuit, and the smoke amount controlling unit 14 changes an output voltage of the step-up/ down circuit, so that the step-up/ down circuit outputs the required output voltage or required output power to the atomizer 12.

Or, the voltage outputting unit 13 comprises a power switch. Then, the smoke amount controlling unit 14 calculates a duty ratio according to the current output voltage and the required output voltage outputted to the atomizer, or according to the current output power and the required output power outputted to the atomizer, and the smoke amount controlling unit 14 outputs a Pulse Width Modulation (PWM) signal with the calculated duty ratio to the power switch to output the required output voltage or the required output power to the atomizer 12.

In which, the smoke amount controlling unit 14 calculates the duty ratio D according to the following formula:

$$D = \frac{U_1}{U_2}$$

$U_1$ of the formula represents the required output voltage and $U_2$ represents the current voltage outputted to the atomizer 12;
or,

$$D = \frac{\sqrt{PR}}{U_2}$$

P of the formula represents the required output power and R represents resistance of the atomizer 12.

In the second embodiment of the smoke amount controlling method of the electronic cigarette of the present invention, the compensation smoke amount is calculated by the difference of smoke amounts generated by the cigarette and the electronic cigarette under the same conditions of the smoking negative pressure and the smoking time, and according to the compensation smoke amount, the required output voltage or the required output power is calculated, so as to enable the voltage or the power outputted to the atomizer of the electronic cigarette is the calculated required output voltage or the calculated required output power, thus the smoke amount of the electronic cigarette is close or equal to the standard smoke amount of the cigarette.

In the third embodiment of the smoke amount controlling method of the electronic cigarette of the present invention, the smoke amount controlling method comprises the following steps:

S1. pre-establishing a mathematical model of a relationship among smoking intensity, smoking time and an output voltage or output power to simulate a smoke amount of a cigarette, and the smoking intensity is characterized by an airflow velocity in an air flow path of the electronic cigarette and/ or a size of an air pressure inside the electronic cigarette;

S2. detecting current smoking intensity and current smoking time of the electronic cigarette;

S3. calculating and/ or finding out a corresponding voltage or corresponding power from the mathematical model, according to the detected smoking intensity and the detected smoking time;

S4. adjusting a voltage or power outputted to the atomizer, according to the calculated and/ or found voltage or found power, so that the smoke amount of the electronic cigarette is close or equal to the amount of the cigarette.

A difference between the smoke amount controlling method of the present embodiment and the first embodiment is that in the present embodiment, the mathematical model comprises a smoke amount model of the cigarette and a second relationship table, and the second relationship table comprises a smoke amount and the output voltage or output power of the existing electronic cigarette which are correspondingly stored, and the smoke amount model of the cigarette is configured to calculate a relationship among a smoking negative pressure, smoking time and a standard smoke amount.

In step S1 of the present embodiment, the smoke amount model of the cigarette and the second relationship table are pre-established, the second relationship table stores the smoke amount and a corresponding output voltage or corresponding output power of the existing electronic cigarette, the established smoke amount model of the cigarette and the established second relationship table are stored in a smoke amount controlling unit 14. The smoke amount model of the cigarette is configured to calculate the relationship among the smoking negative pressure, the smoking time and the standard smoke amount of the cigarette.

In step S2, the smoking negative pressure is detected by a gas sensor 11, and the smoking time is calculated by the smoke amount controlling unit 14. When information of the smoking negative pressure detected by the gas sensor 11 is received by the smoke amount controlling unit 14, the smoke amount controlling unit 14 starts timing until the information of the smoking negative pressure is interrupted (S22).

In step S3, the detected smoking negative pressure and the calculated smoking time are substituted into the smoke amount model of the cigarette by the smoke amount controlling unit 14 to calculate the standard smoke amount positively correlated with the smoking negative pressure and the smoking time. According to the calculated standard smoke amount, the corresponding output voltage or output power is found from the second relationship table by the smoke amount controlling unit 14.

In step S4, the smoke amount controlling unit 14 controls a voltage outputting unit 13 to output the found voltage or the found power to an atomizer 12.

Specifically, the voltage outputting unit 13 comprises a step-up/ down circuit, then in the step S4, the smoke amount controlling unit 14 changes an output voltage of the step-up/ down circuit, thus, the step-up/ down circuit outputs the found voltage or found power to the atomizer 12.

Or, the voltage outputting unit 13 comprises a power switch, and in the step S4, according to the found voltage and a current voltage outputted to the atomizer 14, the smoke amount controlling unit 14 calculates a duty ratio D by the following formula:

$$D = \sqrt{\frac{U_3}{U_2}}$$

$U_3$ of the formula represents the found voltage from the second relationship table and $U_2$ represents the current voltage outputted to the atomizer;
or, according to the found power and a current power outputted to the atomizer, the smoke amount controlling unit 14 calculates a duty ratio D by the following formula:

$$D = \frac{\sqrt{PR}}{U_2}$$

P of the formula represents the found power and R represents resistance of the atomizer.

The smoke amount controlling unit 14 outputs a PWM (Pulse Width Modulation) signal with the calculated duty ratio to the power switch to output the found voltage or the found power to the atomizer 12.

In the third embodiment of the smoke amount controlling method of the electronic cigarette of the present invention, the standard smoke amount of the cigarette is calculated under the same conditions of the smoking negative pressure and the smoking time, and the relationship of the smoke amount of the electronic cigarette and the output voltage or output power is used to determine the output voltage or the output power corresponding to the standard smoke amount, the output voltage or the output power corresponding to the standard smoke amount is outputted to the atomizer, thus the smoke amount of the electronic cigarette is close or equal to the smoke amount (standard smoke amount) of the cigarette. Understandably, different e-liquid may produce different smoke amount under the same output voltage or output power, thus, in a practical application, when the smoke amount of some kind of the cigarette is imitated, such as small cigarettes, cigars, and so on, the smoke amount of the cigarette and the e-liquid should be tested to obtain corresponding data.

Figure 5 is a schematic view of a structure of a first embodiment of the electronic cigarette 10 of the present invention, and as shown in Figure 5, the electronic cigarette 10 comprises the gas sensor 11, the atomizer 12, the voltage outputting unit 13, the smoke amount controlling unit 14, and the smoke amount controlling unit 14 is connected to the gas sensor 11 and the voltage outputting unit 13, respectively, and the voltage outputting unit 13 is also connected to the atomizer 12.

The gas sensor 11 is configured to detect the smoking intensity and send the information of the detected smoking intensity to the smoke amount controlling unit 14.

An electric heating wire is arranged in the atomizer 12, and when electric current passes through the electric heating wire, the electric wire is heated to atomize e-liquid in a liquid state.

The voltage outputting unit 13 is configured to be controlled by the smoke controlling unit 14 to output the corresponding voltage or power to the atomizer 12. The voltage outputting unit 13 may be implemented by the step-up/ down circuit or the power switch.

The smoke amount controlling unit 14 stores a mathematical model of the relationship among the smoking intensity, the smoking time and the output voltage or the output power to simulate the smoke amount of the cigarette, and the smoking intensity is characterized by the airflow velocity in the air flow path of the electronic cigarette and/ or the size of the air pressure inside the electronic cigarette.

The smoke amount controlling unit 14 is configured to calculate the smoking time of the electronic cigarette, when the smoking negative pressure information is detected by the gas sensor 11, the smoke amount controlling unit 14 starts timing until the information is interrupted. The smoke amount controlling unit 14 is further configured to calculate or/ and find out the corresponding voltage or power from the mathematical model according to the smoking intensity detected by the gas sensor 11 and the calculated smoking time. The smoke amount controlling unit 14 controls the voltage outputting unit 13 to adjust the voltage or power outputted to the atomizer 12 according to the calculated and/ or found voltage or found power.

Specifically, in the present embodiment, the mathematical model is a table with pre-measured values, and the smoking intensity is characterized by the size of the air pressure inside the electronic cigarette, and the smoke amount controlling unit 14 finds the corresponding voltage or power from the mathematical model according to the detected smoking negative pressure and the smoking time, and the voltage outputting unit 13 adjusts the voltage or power outputted to the atomizer 12 according to the found voltage or found power to make the electronic cigarette produce the standard smoke amount. When the voltage outputting unit 13 comprises the step-up/ down circuit, the smoke amount controlling unit 14 changes the output voltage of the step-up/ down circuit to make the step-up/ down circuit output the found voltage or found power to the atomizer 12. When the voltage outputting unit 13 comprises the power switch, the smoke amount controlling unit 14 determines the duty ratio according to the found voltage and the current voltage outputted to the atomizer 12, or according to the found power and the current voltage outputted to the atomizer 12, and the smoke amount controlling unit 14 outputs a PWM (Pulse Width Modulation) signal with the calculated duty ratio to the power switch to output the found voltage or found power to the atomizer 12.

In the first embodiment of the electronic cigarette 10 of the present invention, the pre-established data model is a table, and the table stores the smoking negative pressure, smoking time and the corresponding output voltage or the corresponding output power, and the corresponding output voltage or output power found from the mathematical model is outputted to the atomizer, so that the smoke amount of electronic cigarette is equal to the smoke amount of the cigarette under the same conditions, thus the taste of the electronic cigarette close or equal to taste of the cigarette. In the present embodiment, the gas sensor 11 is an air pressure sensor, and certainly, the gas sensor 11 can also be an airflow sensor, the gas sensor 11 is not specifically defined.

Figure 6 is a schematic view of a structure of a second embodiment of the electronic cigarette of the present invention and as shown in figure 6, the electronic cigarette 10 comprises the gas sensor 11, the atomizer 12, the voltage outputting unit 13, and the smoke amount controlling unit 14, the smoke amount controlling unit 14 is connected to the gas sensor 11 and the voltage outputting unit 13, respectively, and the voltage outputting unit 13 is also connected to the atomizer 12.

A difference of the present embodiment and the first embodiment of the electronic cigarette 10 is that in the present embodiment, the mathematical model comprises the smoke amount model of the cigarette, the smoke amount model of the existing electronic cigarette and the first relationship table, and the first relationship table stores the compensation smoke amount and the corresponding compensation voltage or the corresponding compensation power.

Specifically, the smoke amount controlling unit 14 calculates the standard smoke amount of the cigarette positively related to smoking negative pressure and smoking time by substituting the smoking negative pressure detected by the gas sensor 11 and the calculated smoking time into the smoke amount model of the cigarette, and the smoke amount of the existing electronic cigarette is calculated by substituting the smoking negative pressure detected by the gas sensor 11 and the calculated smoking time into the smoke amount model of the existing electronic cigarette, and the difference of the standard smoke amount of the cigarette and the smoke amount of the existing electronic cigarette is calculated to obtain the compensation smoke amount, and the corresponding compensation voltage or the corresponding compensation power is found from the first relationship table according to the calculated compensation smoke amount, and the voltage outputting unit 13 adjusts the voltage or power outputted to the atomizer 12 according to the found compensation voltage or the found compensation power.

In the present embodiment, the smoke amount controlling unit 14 comprises:

> a summation module 141, configured to obtain the required output voltage from the sum of the found compensation voltage and the current voltage outputted to the atomizer 12, or obtain the required output power from the sum of the found compensation power and the current power outputted to the atomizer 12;

> a control module 142 configured to control the voltage outputting unit 13 to output the required output voltage or required output power to the atomizer 12.

When the voltage outputting unit 13 comprises the power switch, the control module 142 calculates the duty ratio D according to the required output voltage and the current voltage outputted to the atomizer 12, or according to the required output power and the current power outputted to the atomizer 12, and the control module 12 outputs a PWM signal with the calculated duty ratio D to the power switch to control on-off time of the power switch to output the required output voltage or the required output power to the atomizer 12.

The control module 142 determines the duty ratio D according to the following formula:

$$D = \frac{U_1}{U_2}$$

$U_1$ of the formula represents the required output voltage and $U_2$ represents the current voltage outputted to the atomizer;
Or,

$$D = \frac{\sqrt{PR}}{U_2}$$

P of the formula represents the required output power and R represents resistance of the atomizer 12. In the second embodiment of the electronic cigarette of the present invention, the compensation smoke amount is calculated by the difference of smoke amounts generated by the cigarette and the electronic cigarette under the same conditions of the smoking negative pressure and the smoking time, and according to the compensation smoke amount, the required output voltage or required output power is calculated, so as to enable the voltage or the power outputted to the atomizer of the electronic cigarette is the calculated required output voltage or the calculated required output voltage, thus the smoke amount of the electronic cigarette is close or equal to the standard smoke amount of the cigarette.

As shown in Figure 5, in the third embodiment of the electronic cigarette 10 of the present invention, the electronic cigarette 10 comprises the gas sensor 11, the atomizer 12, the voltage outputting unit 13, and the smoke amount controlling unit 14, the smoke amount controlling unit 14 is connected to the gas sensor 11 and the voltage outputting unit 13, respectively, and the voltage outputting unit 13 is connected to the atomizer 12.

A difference of the present embodiment and the first embodiment of the electronic cigarette 10 is that in the present embodiment, the mathematical model comprises the smoke amount model of the cigarette and the second relationship table, and the second relationship table stores smoke amount and the corresponding output voltage or the corresponding output power of the existing electronic cigarette, and the smoke amount model of the cigarette is configured to calculate the relationship among the smoking negative pressure, the smoking time and the standard smoke amount.

The smoke amount controlling unit 14 substitutes the smoking negative pressure detected by the gas sensor 21 and the calculated smoking time of the current electronic cigarette into the smoke amount model of the cigarette to calculate the standard smoke amount, and according the relationship of the smoke amount and the output voltage or output power in the second relationship table, the corresponding output voltage or output power of the standard smoke amount is found from the relationship table, and the voltage outputting unit 13 is controlled to output the found voltage or the found power to the atomizer 12.

When the voltage outputting unit 13 comprises the step-up/ down circuit, the smoke amount controlling unit 14 changes the output voltage of the step-up/ down circuit to make the step-up/ down circuit output the found voltage or found power to the atomizer 12.

When the voltage outputting unit 13 comprises the power switch, the smoke amount controlling unit 14 determines the duty ratio according to the found voltage and the current voltage outputted to the atomizer 12, or according to the found power and the current power outputted to the atomizer 12, and the smoke amount controlling unit 14 outputs a PWM (Pulse Width Modulation) signal with the calculated duty ratio to the power switch to change the voltage or power outputted to the atomizer 12.

Specifically, the smoke amount controlling unit 14 calculatess the duty ratio D according to the following formula:

$$D = \frac{U_1}{U_2}$$

$U_1$ of the formula represents the found voltage and $U_2$ represents the current output voltage; or,

$$D = \frac{\sqrt{PR}}{U_2}$$

P of the formula represents the found power and R represents resistance of the atomizer 12.

In the third embodiment of the electronic cigarette 10 of the present invention, the standard smoke amount of the cigarette is calculated under the same conditions of the smoking negative pressure and the smoking time, and the relationship of the smoke amount of the electronic cigarette and the output voltage or output power is used to determine the output voltage or output power corresponding to the standard smoke amount, and the output voltage or the output power corresponding to the standard smoke amount is outputted to the atomizer, thus the smoke amount of the electronic cigarette is close or equal to the smoke amount (standard smoke amount) of the cigarette.

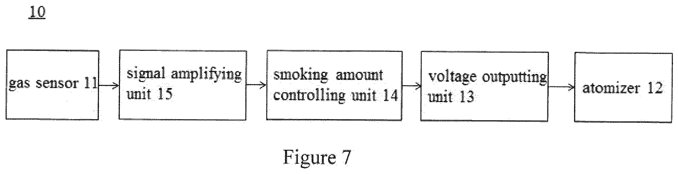

Figure 7 is a schematic view of a structure of a fourth embodiment of the electronic cigarette of the present invention, and as shown in Figure 7, in the present embodiment, the electronic cigarette 10 comprises a gas sensor 11, an atomizer 12, a voltage outputting unit 13, and a smoke amount controlling unit 14.

A difference of the present embodiment and the first embodiment of the electronic cigarette 10 is that the electronic cigarette 10 further comprises a signal amplifying unit 15. The gas sensor 11 is connected to the signal amplifying unit 15, and the signal amplifying unit 15 is connected to the smoke amount controlling unit 14, and the smoke amount controlling unit 14 is connected to the atomizer 12 via the voltage outputting unit 13. the signal amplifying unit 15 is configured to amplify a current smoking negative pressure signal of the electronic cigarette detected by the gas sensor 11, and the signal is outputted the smoke amount controlling unit 14. Thus the sensitivity of the electronic cigarette 10 is improved.

While the present invention has been described with reference to preferred embodiments, however, the present invention is not limited to above-mentioned embodiments, and to a person in the art, the invention can have various changes and variations. Those modifications, improvements and equivalent substitutions, which don't depart from the scope of the spirit and the principle of the present invention, should be included within the scope of the present invention.

**Claims**

1. A method for controlling a smoke amount of an electronic cigarette, **characterized in that** the method comprises steps as follows:

    S1. pre-establishing a mathematical model of a relationship among smoking intensity, smoking time and an output voltage or output power to simulate a smoke amount of a cigarette, the smoking intensity is **characterized by** an airflow velocity in an air flow path of the electronic cigarette and/ or a size of an air pressure inside the electronic cigarette;
    S2. detecting current smoking intensity and current smoking time of the electronic cigarette;
    S3. calculating and/ or finding out a corresponding voltage or corresponding power from the mathematical model, according to the detected smoking intensity and the detected smoking time;
    S4. adjusting a voltage or power outputted to an atomizer of the electronic cigarette, according to the calculated and/or found voltage or power.

2. The method for controlling the smoke amount of the electronic cigarette according to claim 1, **characterized in that** the mathematical model is a table with pre-measured values, and the smoking intensity is **characterized by** the size of the air pressure inside the electronic cigarette, and the method comprising steps as follows:

S11. pre-establishing the mathematical model of the relationship among a smoking negative pressure, the smoking time and the output voltage or the output power to simulate the smoke amount of the cigarette, the smoking negative pressure refers to the size of the air pressure inside the electronic cigarette;
S21. detecting a current smoking negative pressure and the current smoking time of the electronic cigarette;
S31. finding out the corresponding voltage or the corresponding power from the mathematical model, according to the detected smoking negative pressure and the detected smoking time;
S41. adjusting the voltage or power outputted to the atomizer, according to the found voltage or the found power.

3. The method for controlling the smoke amount of the electronic cigarette according to claim 1, **characterized in that** the smoking intensity is **characterized by** the size of the air pressure inside the electronic cigarette; the mathematical model comprises a smoke amount model of the cigarette, a smoke amount model of an existing electronic cigarette and a first relationship table; the first relationship table stores a compensation smoke amount and a corresponding compensation voltage or corresponding compensation power, and the smoke amount model of the cigarette is configured to calculate a relationship among a smoking negative pressure, the smoking time and a standard smoke amount of the cigarette, and the smoke amount model of the existing electronic cigarette is configured to calculate a relationship among the smoking negative pressure, the smoking time and a smoke amount of the existing electronic cigarette, and the smoking negative pressure refers to the size of the air pressure inside the electronic cigarette; and the method comprising steps as follows:

S12. pre-establishing the smoke amount model of the cigarette, the smoke amount model of the existing electronic cigarette and the first relationship table;
S22. detecting a current smoking negative pressure and the current smoking time of the electronic cigarette;

S32. according to the detected smoking negative pressure and the detected smoking time, calculating the standard smoke amount of the cigarette positively correlated to the smoking negative pressure and the smoking time by the smoke amount model of the cigarette, calculating the smoke amount of the existing electronic cigarette by the smoke amount model of the existing electronic cigarette, and calculating a difference between the standard smoke amount of the cigarette and the smoke amount of the existing electronic cigarette to obtain the compensation smoke amount, and finding the corresponding compensation voltage or the corresponding compensation power from the first relationship table according to the calculated compensation smoke amount;
S42. adjusting the voltage or power outputted to the atomizer according to the found compensation voltage or the found compensation power.

4. The method for controlling the smoke amount of the electronic cigarette according to claim 3, **characterized in that** the step S42 further comprises following sub-steps:

S421. obtaining a required output voltage by summing up the found compensation voltage and a current voltage outputted to the atomizer, or obtaining required output power by summing up the found compensation power and current power outputted to the atomizer;
S422. outputting the required output voltage or the required output power to the atomizer.

5. The method for controlling the smoke amount of the electronic cigarette according to claim 4, **characterized in that** the sub-step S422 further comprises following secondary sub-steps:

S4221. calculating a duty ratio, according to the required output voltage and the current voltage outputted to the atomizer, or according to the required output power and the current power outputted to the atomizer;
S4222. making that the voltage outputted to the atomizer is the required output voltage or that the power outputted to the atomizer is the required output power according to the calculated duty ratio.

6. The method for controlling the smoke amount of the electronic cigarette according to claim 5, **characterized in that** in the secondary sub-steps S4221, the duty ratio D is calculated according to a following formula:

$$D = \frac{U_1}{U_2}$$

U1 of the formula represents the required output voltage and U2 represents the current voltage outputted to the atomizer;
or,

$$D = \frac{\sqrt{PR}}{U_2}$$

P of the formula represents the required output power and R represents resistance of the atomizer.

7. The method for controlling the smoke amount of the electronic cigarette according to claim 1, **characterized in that** the smoking intensity is **characterized by** the size of the air pressure inside the electronic cigarette; the mathematical model comprises a smoke amount model of the cigarette and a second relationship table; the second relationship table stores a smoke amount of the existing electronic cigarette and a corresponding output voltage or corresponding output power, and the smoke amount model of the cigarette is configured to calculate a relationship among a smoking negative pressure, the smoking time and a standard smoke amount of the cigarette, and the smoking negative pressure refers to the size of the air pressure inside the electronic cigarette; the method comprising steps as follows:

S13. pre-establishing the smoke amount model of the cigarette and the second relationship table;
S23. detecting a current smoking negative pressure and the current smoking time of the electronic cigarette;
S33. calculating the standard smoke amount of the cigarette by the smoke amount model of the cigarette according to the detected smoking negative pressure and the detected smoking time, the standard smoke amount of the cigarette is positively correlated to the smoking negative pressure and the smoking time, and finding the corresponding voltage or the corresponding power from the second relationship table according to the calculated standard smoke amount;
S43. outputting the found voltage or the found power to the atomizer of the electronic cigarette.

8. The method for controlling the smoke amount of the electronic cigarette according to claim 7, **characterized in that** the step S43 further comprises following sub-steps:

S431. calculating a duty ratio according to the found voltage and a current voltage outputted to the atomizer, or according to the found power and current power outputted to the atomizer;
S432. making that the voltage outputted to the atomizer is the found voltage or that the power outputted to the atomizer is the found power according to the calculated duty ratio.

9. The method for controlling the smoke amount of the electronic cigarette according to claim 8, **characterized in that** in the sub-step S431, the duty ratio D is calculated according to a following formula:

$$D = \sqrt{\frac{U_3}{U_2}}$$

U3 of the formula represents the found voltage from the second relationship table, and U2 represents the current voltage outputted to the atomizer;
or,

$$D = \frac{\sqrt{PR}}{U_2}$$

P of the formula represents the found power, and R represents resistance of the atomizer.

10. An electronic cigarette comprising a gas sensor (11) and an atomizer (12), **characterized in that** the electronic cigarette further comprises:

a voltage outputting unit (13) connected to the atomizer (12);
a smoke amount controlling unit (14) connected to the gas sensor (11) and the voltage outputting unit (13), respectively, and the smoke amount controlling unit (14) stores a mathematical model of a relationship among smoking intensity, smoking time and an output voltage or output power to simulate a smoke amount of a cigarette, the smoking intensity is **characterized by** an airflow velocity in an air flow path of the electronic cigarette and/or a size of an air pressure inside the electronic cigarette; and
the smoke amount controlling unit (14) is configured to calculate the smoking time of the electronic cigarette, and also configured to calculate and/ or to find out a corresponding voltage or corresponding power from the mathematical model according to the smoking intensity detected by the gas sensor (11) and the calculated smoking time, and the smoke amount controlling unit (14) is further configured to control the voltage outputting unit (13) to adjust a voltage or power outputted to the atomizer (12) according to the calculated and/ or found voltage or found power.

11. The electronic cigarette according to claim 10, **characterized in that** the mathematical model is a table with pre-measured values, and the smoking intensity is **characterized by** the size of the air pressure inside the electronic cigarette; the smoke amount controlling unit (14) finds the corresponding voltage or the corresponding power from the mathematical model according to a detected smoking negative pressure and detected smoking time, and the voltage outputting unit (13) is controlled to adjust the voltage or power outputted to the atomizer (12), according to the found voltage or found power; the smoking negative pressure refers to the size of the air pressure inside the electronic cigarette.

12. The electronic cigarette according to claim 10, **characterized in that** the smoking intensity is **characterized by** the size of the air pressure inside the electronic cigarette; the mathematical model comprises a smoke amount model of the cigarette, a smoke amount model of an existing electronic cigarette and a first relationship table; the first relationship table stores a compensation smoke amount and a corresponding compensation voltage or corresponding compensation power, and the smoke amount model of the cigarette is configured to calculate a relationship among a smoking negative pressure, the smoking time and a standard smoke amount of the cigarette, and the smoke amount model of the existing electronic cigarette is configured to calculate a relationship among the smoking negative pressure, the smoking time and a smoke amount of the existing electronic cigarette, and the smoking negative pressure refers to the size of the air pressure inside the electronic cigarette; and according to the smoking negative pressure detected by the gas sensor (11) and the calculated smoking time, the smoke amount controlling unit (14) uses the smoke amount model of the cigarette to calculate the standard smoke amount of the cigarette, the standard smoke amount of the cigarette is positively correlated with the smoking negative pressure and the smoking time, and the smoke amount controlling unit (14) further uses the smoke amount model of the existing electronic cigarette to calculate the smoke amount of the existing electronic cigarette, a difference between the standard smoke amount of the cigarette and the smoke amount of the existing electronic cigarette is calculated to obtain the compensation smoke amount, and the corresponding compensation voltage or the corresponding compensation power is found from the first relationship table according to the calculated compensation smoke amount, and the voltage outputting unit (13) is controlled to adjust the voltage or power outputted to the atomizer (12) according to the found compensation voltage or the found compensation power.

13. The electronic cigarette according to claim 12, **characterized in that** the smoke amount controlling unit (14) comprises:

a summation module (141) configured to obtain a required output voltage from a sum of the found compensation voltage and a current voltage outputted to the atomizer (12), or obtain required output power from a sum of the found compensation power and current power outputted to the atomizer (12);
a control module (142) configured to control the voltage outputting unit (13) to output the required output voltage or the required output power to the atomizer (12).

14. The electronic cigarette according to claim 13, **characterized in that** the voltage outputting unit (13) comprises a power switch; the control module (142) calculates a duty ratio according to the required output voltage and the current voltage outputted to the atomizer (12), or according to the required output power and the current power outputted to the atomizer (12), and the control module (142) outputs a pulse width modulation signal with the calculated duty ratio via the power switch to output the required output voltage or the required output power to the atomizer (12);
the control module (142) calculates the duty ratio D according to a following formula:

$$D = \frac{U_1}{U_2}$$

U1 of the formula represents the required output voltage and U2 represents the current voltage outputted to the atomizer (12);
or,

$$D = \frac{\sqrt{PR}}{U_2}$$

P of the formula represents the required output power and R represents resistance of the atomizer (12).

**15.** The electronic cigarette according to claim 13, **characterized in that** the voltage outputting unit (13) comprises a step-up/ down circuit; the control module (142) changes an output voltage of the step-up/ down circuit to output the required output voltage or the required output power to the atomizer (12) through the step-up/down circuit.

**16.** The electronic cigarette according to claim 10, **characterized in that** the smoking intensity is **characterized by** the size of the air pressure inside the electronic cigarette; the mathematical model comprises a smoke amount model of the cigarette and a second relationship table; the second relationship table stores a smoke amount of an existing electronic cigarette and a corresponding output voltage or corresponding output power, and the smoke amount model of the cigarette is configured to calculate a relationship among a smoking negative pressure, the smoking time and a standard smoke amount of the cigarette, and the smoking negative pressure refers to the size of the air pressure inside the electronic cigarette;
according to a current smoking negative pressure detected by the gas sensor (11) and the calculated smoking time of the electronic cigarette, the smoke amount controlling unit (14) uses the smoke amount model of the cigarette to calculate the standard smoke amount of the cigarette, and according to the calculated standard smoke amount, the corresponding voltage or the corresponding power is found from the second relationship table, and the voltage outputting unit (13) is controlled to output the found voltage or the found power to the atomizer (12).

**17.** The electronic cigarette according to claim 16, **characterized in that** the voltage outputting unit (13) comprises a step-up/ down circuit; the smoke amount controlling unit (14) changes an output voltage of the step-up/ down circuit to output the found voltage or the found power to the atomizer (12) through the step-up/ down circuit.

**18.** The electronic cigarette according to claim 16, **characterized in that** the voltage outputting unit (13) comprises a power switch; the smoke amount controlling unit (14) calculates a duty ratio according to the found voltage and a current voltage outputted to the atomizer (12), or according to the found power and current power outputted to the atomizer (12), and the voltage outputting unit (13) outputs a pulse width modulation signal with the calculated duty ratio to the power switch to change the voltage outputted to the atomizer (12).

**19.** The electronic cigarette according to claim 18, **char-**

acterized in that the smoke amount controlling unit (14) calculates the duty ratio D according to a following formula:

$$D = \sqrt{\frac{U_3}{U_2}}$$

U3 of the formula represents the found voltage from the second relationship table, and U2 represents the current voltage outputted to the atomizer (12);
or,

$$D = \frac{\sqrt{PR}}{U_2}$$

P of the formula represents the found power and R represents resistance of the atomizer (12).

**20.** The electronic cigarette according to any one of claim 11-19, **characterized in that** the electronic cigarette further comprises:

a signal amplification unit (15) connected to the air pressure sensor (11) and the smoke amount controlling unit (14), respectively, and the signal amplification unit (15) is configured to amplify a current smoking negative pressure signal of the electronic cigarette detected by the gas sensor (11) and output the amplified smoking negative pressure signal to the smoke amount controlling unit (14).

Figure 1

Figure 2

Figure 3

EP 3 225 118 A1

S1

pre-establishing a mathematical model of a relationship among smoking intensity, smoking time and an output voltage or output power to simulate a smoke amount of a cigarette

S2

detecting current smoking intensity and current smoking time of the electronic cigarette

S3

calculating and/ or finding out a corresponding voltage or corresponding power from the mathematical model, according to the detected smoking intensity and the detected smoking time

S4

adjusting a voltage or power outputted to the atomizer, according to the calculated and/ or found voltage or power

Figure 4

10

| gas sensor 11 | → | smoking amount controlling unit 14 | → | voltage outputting unit 13 | → | atomizer 12 |

Figure 5

10

| gas sensor 11 | → | smoking amount controlling unit 14<br><br>summation module 141<br><br>control module 142 | → | voltage outputting unit 13 | → | atomizer 12 |

Figure 6

10

| gas sensor 11 | → | signal amplifying unit 15 | → | smoking amount controlling unit 14 | → | voltage outputting unit 13 | → | atomizer 12 |

Figure 7

EP 3 225 118 A1

# INTERNATIONAL SEARCH REPORT

| International application No. |
|---|
| **PCT/CN2014/092322** |

## A. CLASSIFICATION OF SUBJECT MATTER

A24F 47/00 (2006.01) i; G06F 17/30 (2006.01) i

According to International Patent Classification (IPC) or to both national classification and IPC

## B. FIELDS SEARCHED

Minimum documentation searched (classification system followed by classification symbols)

A24F 47, A61M 15, G06F

Documentation searched other than minimum documentation to the extent that such documents are included in the fields searched

Electronic data base consulted during the international search (name of data base and, where practicable, search terms used)

CNABS; CNTXT; VEN: XIANG, Zhiyong; JIRUI TECHNOLOGY, virtual, atomize, mathematical model, electrical, cigarette, substitute, simulate, cigar, tobacco, imitate, atomizer, electronic, voltage, airflow, current, power

## C. DOCUMENTS CONSIDERED TO BE RELEVANT

| Category* | Citation of document, with indication, where appropriate, of the relevant passages | Relevant to claim No. |
|---|---|---|
| X | CN 104114049 A (ENBRIGHT CO., LTD.), 22 October 2014 (22.10.2014), claims 1-37 | 1-2 |
| Y | CN 104114049 A (ENBRIGHT CO., LTD.), 22 October 2014 (22.10.2014), claims 1-37 | 10-11 |
| Y | CN 104026742 A (XIANG, Zhiyong), 10 September 2014 (10.09.2014), claims 6-10, and description, paragraphs 0034 and 0046 | 10-11 |
| A | WO 2014020539 A1 (WHITE MIST ELECTRONICS INC.), 06 February 2014 (06.02.2014), the whole document | 1-20 |
| A | CN 103997921 A (PHILIP MORRIS PRODUCTS S.A.), 20 August 2014 (20.08.2014), the whole document | 1-20 |
| A | CN 104026743 A (XIANG, Zhiyong), 10 September 2014 (10.09.2014), the whole document | 1-20 |
| A | CN 103974638 A (PHILIP MORRIS PRODUCTS S.A.), 06 August 2014 (06.08.2014), the whole document | 1-20 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 18 August 2015 (18.08.2015) | **08 September 2015 (08.09.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xiaoyuan** Telephone No.: (86-10) **62085241** |

Form PCT/ISA/210 (second sheet) (July 2009)

21

# INTERNATIONAL SEARCH REPORT

International application No.

**PCT/CN2014/092322**

**C (Continuation).    DOCUMENTS CONSIDERED TO BE RELEVANT**

| Category* | Citation of document, with indication, where appropriate, of the relevant passages | Relevant to claim No. |
|---|---|---|
| A | CN 103404969 A (FOSHAN XMART CHIP MICRO-ELECTRONICS CO., LTD.), 27 November 2013 (27.11.2013), the whole document | 1-20 |
| A | CN 104106842 A (HUIZHOU JIRUI TECHNOLOGY CO., LTD.), 22 October 2014 (22.10.2014), the whole document | 1-20 |
| A | CN 104037719 A (XIANG, Zhiyong), 10 September 2014 (10.09.2014), the whole document | 1-20 |

Form PCT/ISA/210 (continuation of second sheet) (July 2009)

## INTERNATIONAL SEARCH REPORT
### Information on patent family members

International application No.

**PCT/CN2014/092322**

| Patent Documents referred in the Report | Publication Date | Patent Family | Publication Date |
|---|---|---|---|
| CN 104114049 A | 22 October 2014 | US 2014334804 A1 | 13 November 2014 |
| | | WO 2013147492 A1 | 03 October 2013 |
| CN 104026742 A | 10 September 2014 | US 2014251324 A1 | 11 September 2014 |
| | | WO 2014134813 A1 | 12 September 2014 |
| WO 2014020539 A1 | 06 February 2014 | None | |
| CN 103997921 A | 20 August 2014 | CA 2858479 A1 | 04 July 2013 |
| | | AU 2012360820 A1 | 21 August 2014 |
| | | IL 232369 D0 | 30 June 2014 |
| | | MX 2014008085 A | 19 March 2015 |
| | | KR 20140118985 A | 08 October 2014 |
| | | JP 2015507477 A | 12 March 2015 |
| | | EP 2797447 A2 | 05 November 2014 |
| | | NZ 624139 A | 29 May 2015 |
| | | WO 2013098398 A3 | 22 August 2013 |
| | | HK 1198241 A1 | 20 March 2015 |
| | | WO 2013098398 A2 | 04 July 2013 |
| | | US 2014345633 A1 | 27 November 2014 |
| CN 104026743 A | 10 September 2014 | WO 2014134816 A1 | 12 September 2014 |
| | | US 2014251356 A1 | 11 September 2014 |
| CN 103974638 A | 06 August 2014 | MX 2014008089 A | 06 October 2014 |
| | | NZ 624115 A | 29 May 2015 |
| | | AU 2012360819 A1 | 21 August 2014 |
| | | KR 20140118980 A | 08 October 2014 |
| | | EP 2797448 A2 | 05 November 2014 |
| | | AR 089626 A1 | 03 September 2014 |
| | | CA 2858288 A1 | 04 July 2013 |
| | | WO 2013098397 A3 | 22 August 2013 |
| | | IL 232365 D0 | 30 June 2014 |
| | | WO 2013098397 A2 | 04 July 2013 |
| | | JP 2015503916 A | 05 February 2015 |
| CN 103404969 A | 27 November 2013 | WO 2014054035 A1 | 10 April 2014 |
| | | CN 104736005 A | 24 June 2015 |
| CN 104106842 A | 22 October 2014 | US 2014305450 A1 | 16 October 2014 |
| CN 104037719 A | 10 September 2014 | US 2014254055 A1 | 11 September 2014 |

Form PCT/ISA/210 (patent family annex) (July 2009)